# EUROPEAN PATENT SPECIFICATION

(11) **EP 1 063 835 B1**
(45) Date of publication and mention of the grant of the patent: **10.03.2010**
(21) Application number: 99961344.1
(22) Date of filing: 22.12.1999
(51) Int. Cl.: H04M 1/247, H04M 1/725, G06F 3/14, G06F 17/30

(54) **COMMUNICATION TERMINAL**
KOMMUNIKATIONSENDGERÄT
TERMINAL DE COMMUNICATION

(30) Priority: 25.12.1998 JP 36969098; 14.01.1999 JP 822499; 28.01.1999 JP 2040399; 10.02.1999 JP 3281299; 12.03.1999 JP 6686499; 31.03.1999 JP 9313499
(43) Date of publication of application: 27.12.2000
(73) Proprietor: SANYO ELECTRIC CO., LTD., Moriguchi-shi, Osaka 570-8677 (JP); Tottori Sanyo Electric Co., Ltd., Tottori-shi, Tottori 680-0061 (JP)
(72) Inventor: OKAGAKI, Mitsunori, Tottori-shi, Tottori 680-0072 (JP)
(74) Representative: Smith, Peter James
(86) International application number: PCT/JP1999/007248
(87) International publication number: WO 2000/039984

(56) References cited:
- EP-A- 0 659 004
- EP-A- 0 726 657
- EP-A- 0 751 627
- EP-A- 0 886 414
- EP-A2- 0 679 003
- DE-A- 19 600 555
- JP-A- 5 135 050
- JP-A- 9 128 407
- US-A- 5 559 945
- US-A- 5 579 472
- US-A- 5 737 394

## Description

### Technical Field

The present invention relates to a communication terminal, especially a communication terminal whose display unit having a limited display area is more effectively used to improve its usefulness.

### Background Art

The communication terminal of the present invention is typically a inobile communication terminal, especially a pager (pocket bell), a PHS (personal handy phone system) phone, a cellular phone and the like. Personal computers endowed with communication capability are also included therein.

Communication terminals are provided with an increasing number of functions to meet various user demands. On the other hand, miniaturization of communication terminals moves forward, and therefore, the display areas of their display units are becoming smaller. Consequently, the need to display more functions using a smaller display area is becoming a problem.

One of the functions which a communication terminal is provided with is the storage and reproduction of messages. It enables a message to be sent from a transmitting terminal to a receiving terminal via a switching station, and for the message to then be reproduced at the receiving terminal. The message may be a message of character codes (such as a text message) or a voice message. In the case of a text message, the switching station transmits the message to the receiving terminal, which is then stored in a memory unit within the receiving terminal until it is reproduced or displayed by an addressee. In the case of a voice message, the voice data is stored in a voice mail centre within the switching station, and information indicating existence of the voice message is transmitted from the station to the receiving terminal. The voice data is then transmitted in response to an addressee's requirement, and reproduced (vocalized) at the receiving terminal.

There is a communication system which can transmit identifying information together with a message, the information indicating whether the message is a preferential (urgent) one or not. The communication system based on U.S. standard TIA/EIA/IS637 is one example thereof. There is also a communication terminal which holds a message even after the message is reproduced until it is deleted by a specific deleting operation.

In such a communication terminal provided with a message displaying facility; it is desirable to provide indications to distinguish between a message having a preferential status from one having an ordinary status at the time of displaying them in list form. However, this is impracticable when the message displaying area is small.

Furthermore, although it is convenient to indicate the number of text messages not yet reproduced as well as the number of text messages already reproduced, it is also impracticable to do this when the message displaying area is small.

Sometimes if the text message is very long then the complete message cannot be displayed at one time. The message therefore has to be scrolled along, which causes inconvenience in reading the message. This problem can be serious when trying to display an E-mail of a long text from a personal computer and the like in the display unit of a communication terminal, such as a cellular phone.

There is a communication terminal which, when there arises a reception error or a memory overflow while it is used for voice communication, indicates certain information immediately on its current screen to notify a user of that status if it is urgent, and if it is not urgent, indicates the information at the time of returning to the initial screen. However, in such a communication terminal, if the power is turned off before returning to the initial screen, the information is not indicated, and accordingly the user cannot be shown the information until the power is next turned on.

There is also a communication terminal in which, for making a setting of the volume of a sound, (such as a received sound, transmitting sound, key click sound and the like), a setting of illuminating time of the backlight, a setting of notifying procedure of an incoming call, and for lookup in a phone directory and so on, an operation which includes selecting one of options in each selection screen (a menu screen) to open the next menu screen, is repeated in order to make desired settings by selecting necessary functions. Since the number of options that can be displayed in the display area is limited, a system is known that enables a user to make a selection from options other than those currently displayed in the display area by operating a ten-key pad. In the case where a selection of options other than those currently displayed in the display area is allowed, when a return to the previous screen has been made, the option selected is not displayed. This causes inconvenience.

EP 0726657 discloses a communication terminal having a display means 25 in the form of a liquid crystal display (LCD). A telephone number list can be displayed on the display means 25 and each telephone number represents an option that can be selected by a user. The list is arranged alphabetically by the registered name associated with each telephone number and frequently used telephone numbers also appear in a different list and are labelled 1 to 9. Only a proportion of the telephone numbers in the list can be displayed on the display means 25 at any one time. A rotary key 10j can be operated by a user to move a curser K along the list. The curser K can also be moved straight to a particular registered name in the list or a particular frequently used number by pressing one of the numeral keys 10b. For example, if the display means 25 shows the frequently used telephone numbers then pressing one of the "1" to "9" numeral keys 10b will automatically move the curser K to the corresponding frequently used telephone number. The selected frequently used telephone number will then be displayed on the display means 25 (see Figs. 18(A) and 18(B)). Similarly, if the display means 25 shows the alphabetically arranged list and the "1" numeral key 10b is pressed then the curser K will automatically move to the names starting with the letter "A". If the "3" numeral key 10b is pressed then the curser K will automatically move to the names starting with the letter "D" and so on.

Once the curser K has been moved to a target registered name, if the rotary key 10j is selected then more detailed data will appear on the display means 25 (see Fig. 16(D)). Selecting the rotary key 10j again will start a telephone call.

If the detailed data is displayed for a predetermined period of time without any activity then list of telephone numbers is closed and a start screen is displayed on the display means 25.

### Disclosure of Invention

The present invention has been made to solve the aforesaid problems, and the object thereof is to provide a communication terminal having an excellent handiness irrespective of its small display area.

The communication terminal of the present invention comprises:
display means for displaying a selection screen for selecting one of a plurality of options; and
display control means for displaying a portion of the plurality of options in the display means in such a way that an option not currently displayed may be selected;
CHARACTERIZED IN THAT the display control means is adapted to display a screen associated with a selected option on selection of an option not currently displayed in the selection screen, and to display the selected option as one of the portion of the plurality of options in the selection screen on the next display of the selection screen.

According to the above structure, it is possible for the user to recognize easily which menu has been selected, because information on the option which has been selected is displayed at the time of returning to the previous selection screen from the screen associated with the selected option.

### Brief Description of Drawings

Fig. 1 is a block diagram showing principal elements of a communication terminal that does not form part of the present invention;
Fig. 23 is a block diagram showing principal elements of the first embodiment of the present invention;
Fig. 24 is a flow chart showing principal operation of the first embodiment;
Fig. 25 is a view showing selection screens and screens of a selected menu of the first embodiment;
Fig. 26 is a view showing displays of screens of the first embodiment in case where a menu which has been selected was displayed in the previous selection screen;
Fig. 27 is a view showing displays of screens of the first embodiment in case where a menu which has been selected was not displayed in the previous selection screen;
Fig. 28 is a view showing an: example of prior art corresponding to Fig. 27;
Fig. 29 is a view showing selection screens and screens of a selected menu of the second embodiment according to the present invention;
Fig. 30 is a view showing displays of screens of the second embodiment in case where a menu which has been selected was displayed in the previous selection screen;
Fig. 31 is a view showing displays of screens of the second embodiment in case where a menu which has been selected was not displayed in the previous selection screen;
Fig. 32 is a view showing displays of screens of the third embodiment in case where a menu which has been selected was displayed in the previous selection screen;
Fig. 33 is a view showing displays of screens of the third embodiment in case where a menu which has been selected was not displayed in the previous selection screen;
Fig. 34 is a view showing displays of screens of the fourth embodiment in case where a menu which has been selected was not displayed in the previous selection screen; and
Fig. 35 is a view showing displays of screens of the fifth embodiment in case where a menu which has been selected was not displayed in the previous selection screen.

### Best Mode for Carrying Out the Invention

The embodiments of this invention will be explained based on the drawings in the following.

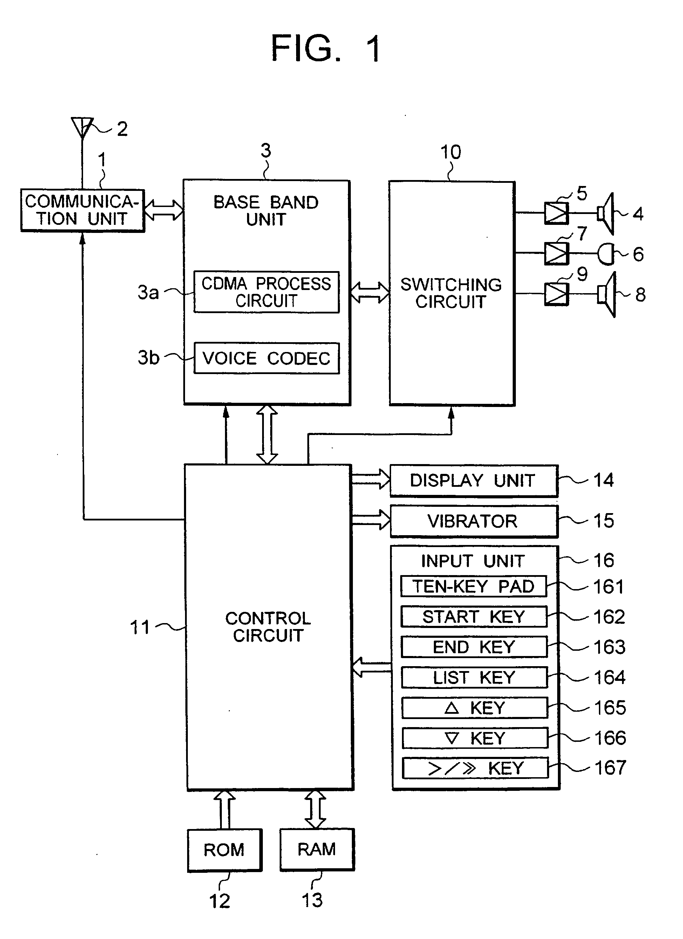

Fig. 1 is a block diagram showing the principal elements of a communication terminal that does not form part of the present invention. The communication terminal is a cellular phone of the CDMA system which uses two or more carriers of the same frequency in the same cell.

A communication unit 1 transmits signals from a baseband unit 3 to a base station (not shown) through an antenna 2, and receives radio waves from the base station through the antenna 2.

The baseband unit 3 has a CDMA processing circuit 3a and a voice codec 3b. The CDMA processing circuit 3a performs a code division multiple access, scramble, error control, and timing detection. The voice codec 3b compresses (coding) and expands (decoding) voices, performs analog-digital conversion, and changes the volume of received voices and the sensitivity of a microphone by its internal amplification circuit (not shown).

A speaker 4 which is used for voice communication by being held to one's ears converts the electric signals from the baseband unit 3 into voices. Before being converted, the electric signals are first amplified in the amplification circuit 5.

A microphone 6 which is used for voice communication converts voices into electric signals. An amplification circuit 7 amplifies the output of the microphone 6, and outputs it to the baseband unit 3.

A speaker 8 is provided to make a voice communication heard by a person nearby. The speaker 8 is disposed at the back of the receiving unit (the speaker 4 being provided on the front of the receiving unit). This speaker 8 converts the electric signals of the baseband unit 3 into voices. Before being converted, the electric signals are first amplified in the amplification circuit 9. The speaker 8 also sounds to give notice of an incoming call.

A switching circuit 10 switches the connection between each of the three amplification circuits 5, 7, and 9 and the baseband unit 3 under the control of the control circuit 11.

The three amplification circuits 5, 7, and 9 have their gains fixed, and cannot change the volume of received voices, or the sensitivity of the microphone. However, the voice codec 3b of the baseband unit 3 may change the volume of received voices, and the sensitivity of the microphone under the control of the control circuit 11.

The control circuit 11 comprises a microprocessor, and controls each unit based on operating programs stored in ROM 12. RAM 13 stores information required for operation of the control circuit 11.

The liquid crystal display unit 14 displays a telephone number dialled, an incoming caller's number, a telephone directory, etc.

A vibrator 15 also generates vibration under the control of the control circuit 11 at the time of receiving a call.

An input unit has a ten-key pad 161 for inputting a telephone number etc. , a start key 162 for starting a communication, an end key 163 for terminating a communication; a list key 164 for displaying messages in a list, a "△" key 165 for moving a cursor upwards (returning the cursor back), a "∇" key 165 for moving the cursor downwards (advancing the cursor forward), and a ">/»" key for switching between an ordinary/preferential status of a message.

Here, a message is in the form of text information which a caller transmits. The caller can specify whether the message is to receive either an ordinary or a preferential status. The communication terminal is a cellular phone, and the size of its display unit 14 may be as small as to display only 15-half size characters (15 columns) by 6-lines at any one time.

### The first embodiment:

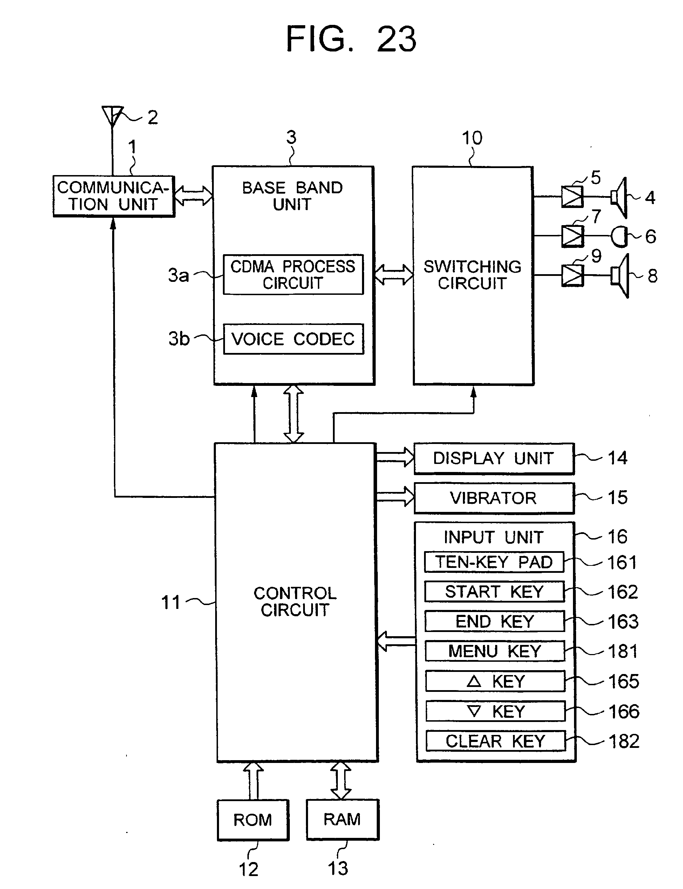

The first embodiment of this invention will now be explained with reference to Figs. 23 to 28C.

Fig. 23 shows the circuit structure of the first embodiment. In this figure, the reference numerals which are the same as those in Fig. 1 represent the same elements.

Explanation of the reference numerals 1 to 11 and 15 is omitted.

A liquid crystal display unit 14 displays telephone numbers and voice messages.

An input unit 16 is not provided with the keys 164 and 167 of Fig. 1, but has a menu key 181 and a clear key 182 instead.

A start key 162 is operated for originating a call, beginning a communication, etc. An end key 163 is operated for ending a communication, etc.

The menu key 181 is operated for displaying setting screens (lookup or edit of telephone directory, memo entry, volume of a received sound, etc).

A "△" key 165 is operated for calling the previous page.

A "∇" key 166 is operated for calling the next page.

The clear key 182 is operated for terminating an operation to return to the original screen, or for erasing data.

The principal operation of the first embodiment will now be explained.

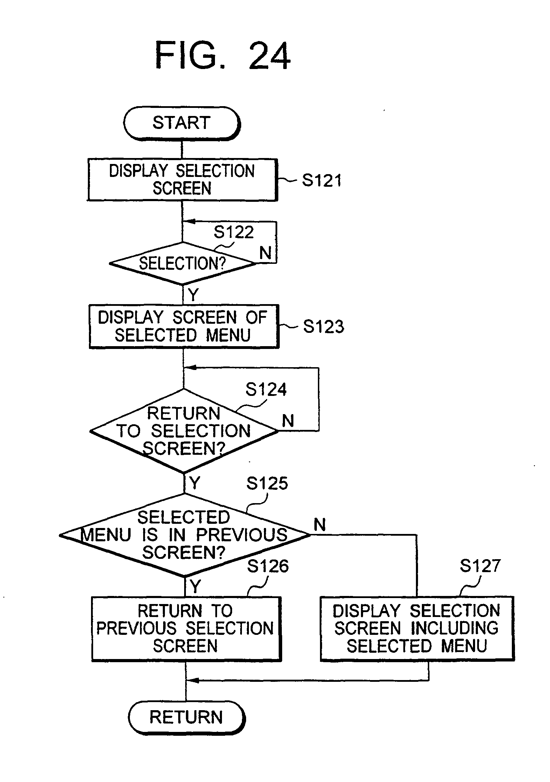

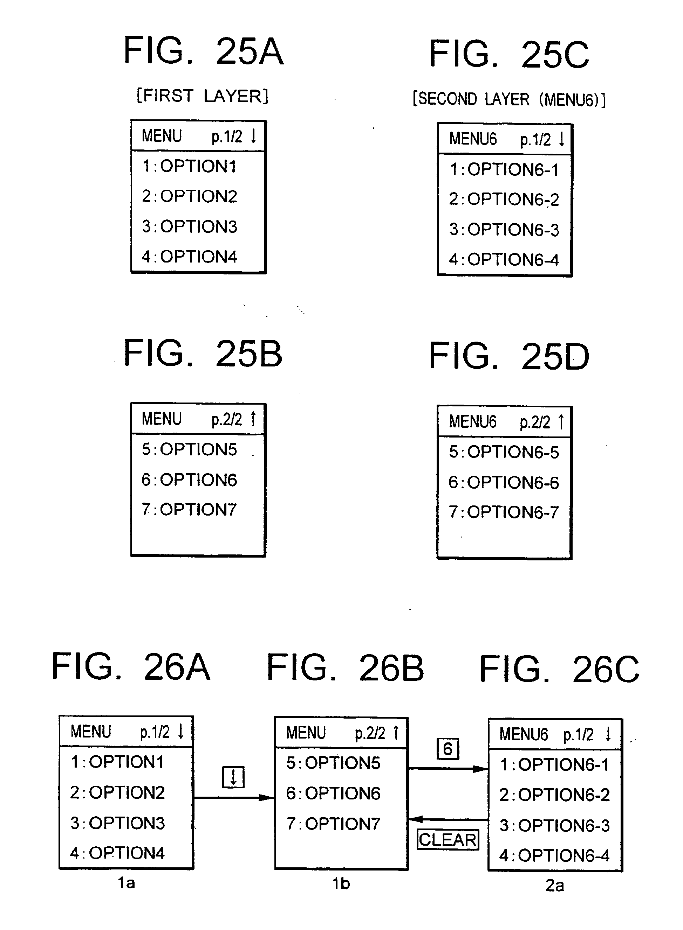

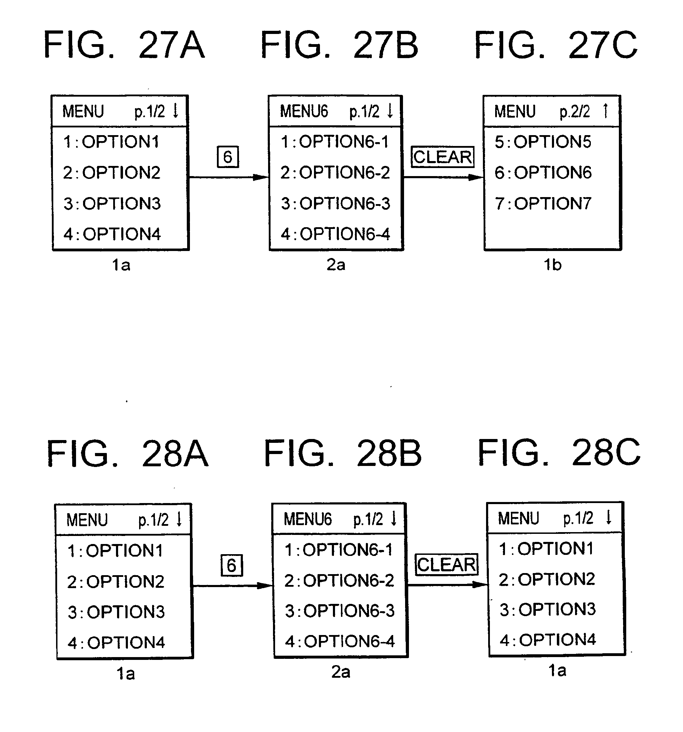

Fig. 24 is a flow chart showing operation of the control circuit 11. Fig. 25 is a view showing kinds of selection screen of the first layer and the second layer. Figs. 26A to 26C and Figs. 27A to 27C are views showing transition from the screen of the first layer to the screen of the second layer, and return from the screen of the second layer to the screen of the first layer.

As shown in Figs. 25A to 25D, the number of options in the selection screen of the first layer is seven, while, the maximum number of options which can be displayed in the display unit 14 at any one time is four. Accordingly, the selection screen of the first layer includes a first page (1a) for displaying options 1 to 4 shown in Fig. 25A, and a second page (1b) for displaying options 5 to 7 shown in Fig. 25B. The control circuit 11 makes the second page (1b) appear, if the "∇" key 166 is operated in a state where the first page (1a) is being displayed. The first page (1a) appears, if the "△" key 165 is operated in a state where the second page (1b) is being displayed.

When the option 6 of the first layer is selected, there are seven options in the screen of menu 6 associated with the option 6 as shown in Figs. 25C and 25D. The screen of menu 6 also includes a first page (2a) shown in Fig. 25C and a second page (2b) shown in Fig. 25D. The control circuit 11 switches between these pages in response to the operation of the "△" key 165 and the "∇" key 166 as described above.

The control circuit 11 performs selection in the first layer in response to an operation of the ten-key pad 161 (Y in S122) for designating option numbers indicated to the left of the names of the options being displayed regardless of the page being displayed (S 121), and makes the screen of the selected option appear (S123). For example, regardless of whether the first page (la) or the second page (lb) is being displayed in the selection screen of the first layer, if the 6 key of the ten-key pad 161 is operated, the screen of menu 6 associated with the option 6 is displayed.

If the clear key 182 is operated in the screen selected in step S123 (Y in S124), the control circuit 11 checks whether the selected option was displayed in the screen (original screen) in the first layer before moving to the second layer (S125). If it was displayed, the original screen is displayed (S126), and if not, the screen of the first layer including the selected option is displayed (S127).

Assume that the 6 key of the ten-key pad 161 is operated to display the selection screen (2a) of menu 6 shown in Fig. 26C in a state where the second page (lb) of the first layer is displayed as shown in Fig. 26B. If the clear key 182 is operated in this state, the display returns to the original screen (lb) in which the option 6 was displayed as shown in Fig. 26B.

Meanwhile, assume that the 6 key of the ten-key pad 161 is operated to display the selection screen (2a) of menu 6 shown in Fig. 27B in a state where the first page (1a) of the first layer is displayed as shown in Fig. 27A. If the clear key 182 is operated in this state, the second page (1b) of the first layer including the option 6 as shown in Fig. 27C is displayed, since the option 6 was not displayed in the first page (la) of the first layer.

Conventionally, when the clear key 182 is operated after moving to Fig. 28B from Fig. 28A by selecting the option 6, the display returns to the first page (1a) of the first layer shown in Fig. 28C, and therefore, the selected option (option 6) is not displayed, which may pose a problem in that it is uncertain which option has been selected.

### The second embodiment:

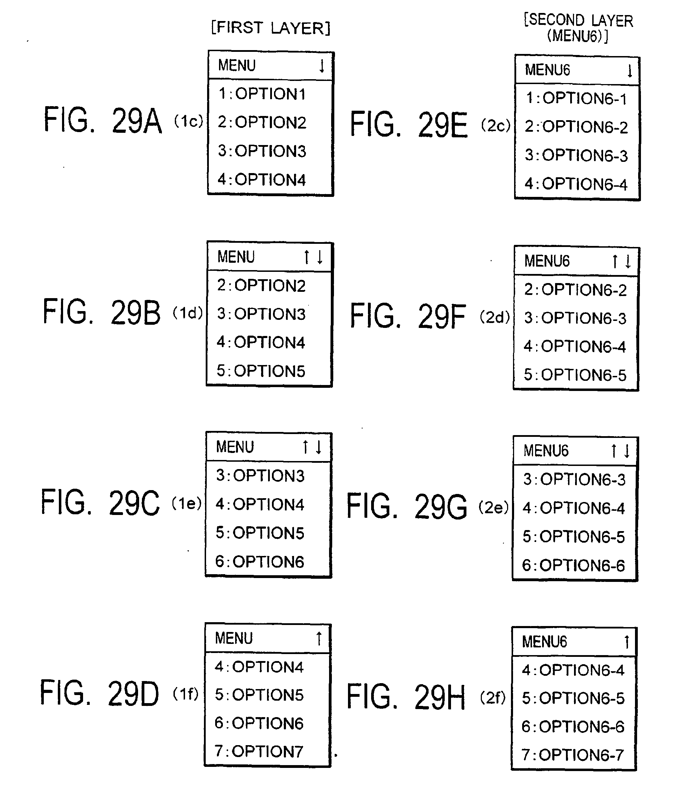

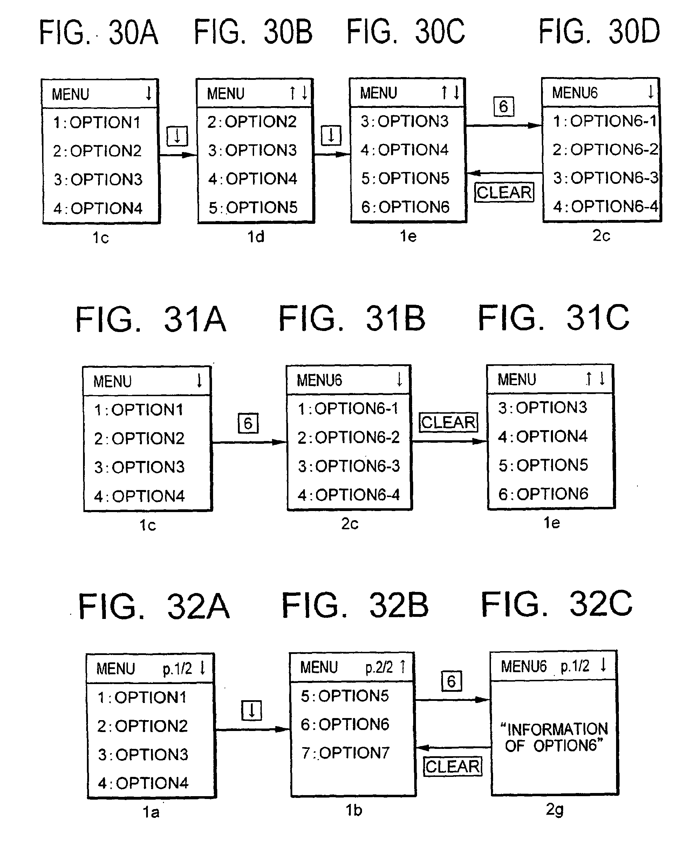

The second embodiment will now be explained. In the first embodiment, options are displayed in two or more pages when they cannot be displayed in one screen. Instead, in the second embodiment they are displayed by being scrolled. Figs. 29A to 29H are views showing kinds of selection screen of the first layer and the second layer. Figs. 30A to 30D and Figs. 31A to 31C are views showing transition from the screen of the first layer to the screen of the second layer, and return from the screen of the second layer to the screen of the first layer.

In any of the selection screens (Fig. 29A to Fig. 29D) of the first layer and the selection screens (Fig. 29E to Fig. 29H) of the second layer in the second embodiment, one line downward scroll is made each time the "∇" key 166 is operated, and one line upward scroll is made each time the "△" key 165 is operated.

For example, assume that the state is changed from Fig. 30A to (le) of Fig. 30C by operating "∇" key 166 twice. In this state, the option 6 is displayed in the bottommost line. Assume that, in this state, the selection screen (2c) of menu 6 associated with the option 6 shown in Fig. 30D is displayed by operating the 6 key of the ten-key pad 161. In this state, when the clear key 182 is operated, it returns to the original screen (1e) shown in Fig. 30C in which the option 6 was displayed.

Assume that the selection screen (2c) of menu 6 associated with the option 6 shown in

Fig. 31B is displayed by operating the 6 key of the ten-key pad 161 in a state where the first page (1c) which does not include the option 6 as shown in Fig. 31A is displayed. If the clear key 182 is operated in this state, the selection screen (le) including the option 6 shown in Fig. 31C is displayed.

### The third embodiment:

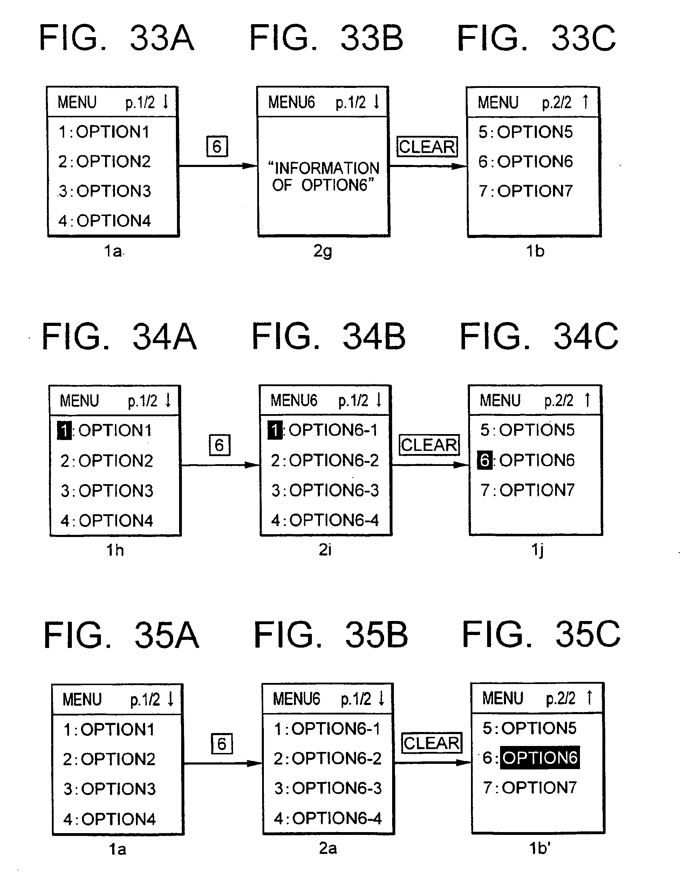

The third embodiment will now be explained. In the first embodiment, the option 6 also brings another selection screen. In the third embodiment, the screen associated with the option 6 is not a selection screen, but it is a screen in which information stored in RAM 13 (a telephone number looked up by name, for example) is displayed. Figs. 32A to 32C and Figs. 33A to 33C are counterparts of Figs. 26A to 26C and Figs. 27A to 27C of the first embodiment, where the screens associated with the option 6 are changed from the selection screens to information screens.

Assume that the information displaying screen (2g) shown in Fig. 32C is displayed by operating the 6 key of the ten-key pad 161 after the "∇" key 166 is operated to bring the state of Fig. 32B, where the first page (la) is displayed in the selection screen of the first layer as shown in Fig. 32A. If the clear key 182 is operated in this state, it makes a return to the original screen (lb) shown in Fig. 32B in which the option 6 was displayed.

On the other hand, assume that the information displaying screen (2g) shown in Fig. 33B is displayed by operating the 6 key of the ten-key pad 161 in a state where the first page (la) of the first layer is displayed as shown in Fig. 33A. If the clear key 182 is operated in this state, the second page (1b) of the first layer including the option 6 shown in Fig. 32C is displayed, since the option 6 was not displayed in the first page (la) of the first layer.

The present invention is not limited to transition within layer-selecting screens as is the case with the third embodiment.

According to the first to third embodiments, the selection screen including the option which has been selected is displayed at the time of returning from the screen of the selected option to the original screen if the selected option was not displayed in the original screen. Therefore, the user can easily recognize the selected option.

### The fourth embodiment:

The fourth embodiment will now be explained. In the selection method of the fourth embodiment, the option which has been selected is marked by a cursor in addition to the selection by the ten-key pad 161.

If the clear key 182 is operated after the selection screen (2i) of menu 6 associated with the option 6 is displayed by operating the 6 key of the ten-key pad 161 in the first page (1h) in which the option 6 is not displayed as shown in Figs. 34A to 34C, the selection screen (1j) including the option 6 at which the cursor is located is displayed.

### The fifth embodiment

The fifth embodiment will now be explained. Figs. 35A to 35C are views showing transition from the screen of the first layer to the screen of the second layer, and transition from the screen of the second layer to the screen of the first layer. Fig. 35C is a counterpart of Fig. 27C of the first embodiment, where the text "OPTION 6" of lb of Fig. 27C is reversed. Thus, the selected option is marked.

In the fourth or fifth embodiment, the user can recognize which option has been selected with certainty, since the selected option is marked by a cursor or display in reverse.

## Claims

1. A communication terminal (1) comprising:
display means (14) for displaying a selection screen for selecting one of a plurality of options; and
display control means (11) for displaying a portion of the plurality of options in the display means (14) in such a way that an option not currently displayed may be selected;
**CHARACTERIZED IN THAT** the display control means (11) is adapted to display a screen associated with a selected option on selection of an option not currently displayed in the selection screen, and to display the selected option as one of the portion of the plurality of options in the selection screen on the next display of the selection screen.

2. A communication terminal (1) according to claim 1, wherein the display control means (11) is further adapted to display information indicating the selected option on the next selection of the selection screen.

## Patentansprüche

1. Ein Datenübertragungsendgerät (1), umfassend:
Anzeigemittel (14) für das Anzeigen einer Anzeigemaske für die Auswahl einer Mehrzahl von Optionen; und
Anzeigesteuerungsmittel (11) für das Anzeigen eines Teils der Mehrzahl von Optionen auf dem Anzeigemittel (14) auf eine solche Weise, dass eine zurzeit nicht dargestellte Option ausgewählt werden kann;
**DADURCH GEKENNZEICHNET, DASS** das Anzeigesteuerungsmittel (11) für das Anzeigen eines mit einer ausgewählten Option assoziierten Bildschirms nach Auswahl einer zurzeit nicht auf der Anzeigemaske dargestellten Option adaptiert ist, und für das Anzeigen der ausgewählten Option als eines der Teile der Mehrzahl von Optionen auf der Anzeigemaske in der nächsten Anzeige der Anzeigemaske.

2. Ein Datenübertragungsendgerät (1) nach Anspruch 1, worin das Anzeigesteuerungsmittel (11) weiter für das Anzeigen von Informationen adaptiert ist, welche die ausgewählte Option der nächsten Auswahl auf der Anzeigemaske andeuten.

## Revendications

1. Terminal de communication (1) comportant :
un moyen d'affichage (14) permettant d'afficher un écran de sélection pour sélectionner l'une d'une pluralité d'options ; et
un moyen de commande d'affichage (11) permettant d'afficher une partie de la pluralité d'options dans le moyen d'affichage (14) d'une telle manière qu'une option qui n'est pas actuellement affichée peut être sélectionnée ;
**CARACTÉRISÉ EN CE QUE** le moyen de commande d'affichage (11) est adapté pour afficher un écran associé à une option sélectionnée lors de la sélection d'une option qui n'est pas actuellement affichée sur l'écran de sélection, et pour afficher l'option sélectionnée comme l'une de la partie de la pluralité d'options sur l'écran de sélection lors du prochain affichage de l'écran de sélection.

2. Terminal de communication (1) selon la revendication 1, dans lequel le moyen de commande d'affichage (11) est par ailleurs adapté pour afficher des informations indiquant l'option sélectionnée lors de la prochaine sélection de l'écran de sélection.
